Europäisches Patentamt

European Patent Office

Office européen des brevets

(11) Numéro de publication: **0 236 194**
**B1**

(12) **FASCICULE DE BREVET EUROPEEN**

(45) Date de publication du fascicule du brevet: 23.01.91

(21) Numéro de dépôt: 87400286.8

(22) Date de dépôt: 09.02.87

(51) Int. Cl.⁵: **H 04 Q 7/04**

(54) Système de radiotéléphonie à changement de relais en cours de communication.

(30) Priorité: 11.02.86 FR 8601823

(43) Date de publication de la demande:
09.09.87 Bulletin 87/37

(45) Mention de la délivrance du brevet:
23.01.91 Bulletin 91/04

(84) Etats contractants désignés:
BE DE ES FR GB IT NL

(56) Documents cités:
DE-A-2 228 327
DE-A-2 236 072

(73) Titulaire: **SOCIETE D'ETUDES ET DE CONSTRUCTIONS ELECTRONIQUES Société Anonyme:**
**214, rue du Faubourg Saint-Martin**
**F-75483 Paris Cedex 10 (FR)**

(72) Inventeur: **Serbanescu, Dan**
**2, rue Rébéval**
**F-75019 Paris (FR)**
Inventeur: **Fricout, Xavier**
**308, rue Lecourbe**
**F-75015 Paris (FR)**

(74) Mandataire: **Phélip, Bruno et al**
**c/o Cabinet Harlé & Phélip 21, rue de La Rochefoucauld**
**F-75009 Paris (FR)**

Courier Press, Leamington Spa, England.

EP 0 236 194 B1

## Description

La présente invention concerne un système de radiotéléphonie de type cellulaire et décentralisé comportant plusieurs relais fixes faisant chacun fonction d'émetteur-récepteur radio accordés sur une première fréquence dite voie balise et sur une pluralité de fréquences dites voies de trafic, et d'unité d'exploitation directement raccordée au réseau téléphonique public commuté, et une pluralité de postes mobiles tels que les radio-téléphones de véhicules.

On connait un tel système qui est mis en oeuvre en France sous le nom "RADIOCOM 2000", et qui est décrit dans une article de la revue "Communication & Transmission" No. 2-1985 sous le titre "Radiocom 2000, Réseau Multiservices de Radiotéléphonie", signé J. Cueugniet et. P. Duplessis. De façon générale, ce système fonctionne dans la bande UHF/VHF, chaque relais couvrant une zone typiquement en forme de cercle de 15 à 30 km de rayon environ en fonction de l'environnement. Chaque poste téléphonique mobile comprend une logique de commande, une interface avec l'usager et un émetteur-récepteur radio piloté par un synthétiseur de fréquences.

Lorsqu'un poste mobile n'est pas en communication, il reste en écoute sur la voie balise du relais de la zone où il se trouve, et dès lors qu'il est appelé ou qu'il appelle, il passe sur une voie de trafic (dite VT par la suite) qui lui est affectée où, après qu'il ait donné notamment son identité sous forme numérique, la communication d'installe en phonie.

Dès lors, le poste mobile ne reçoit plus la voie balise (dite VB par la suite) jusqu'à ce que la communication en phonie soit finie.

Un tel système présente un grave inconvénient lorsque le mobile sort de la zone de couverture du relais car la communication en phonie se dégrade substantiellement jusqu'à être totalement interrompue.

A ce moment-là, le poste mobile se reconnecte sur la voie balise d'un mouveau relais et l'usager doit renouveler son appel s'il désire finir sa conversation.

Ainsi, les brevets DE—2 236 072 et DE—2 228 327 décrivent des systèmes de radiotéléphonie comportant des relais fixes et des postes mobiles qui ont pour but de donner en permanence l'état des voies sur lesquelles sont émis les signaux de données au moyen d'un deuxième récepteur, et de pouvoir transférer une communication téléphonique d'un relais à un autre sans coupure.

Ces systèmes comprennent outre un émetteur radio et un premier récepteur radio, un second récepteur radio ou récepteur de recherche relié en parallèle avec le premier sélecteur. Les deux récepteurs radio son reliés à une amplificateur d'entrée. Les systèmes fonctionnent de la façon suivante: le second récepteur ou récepteur de recherche échantillonne successivement toutes les voies d'appel du réseau radio téléphonique dans un premier cycle d'échantillonnage, puis il sélectionne la voie d'appel possédant, au lieu de réception, la plus grande intensité de champ et mémorise son numéro de voie d'appel. Le récepteur de recherche sélectionne ensuite dans un second cycle d'échantillonnage, une voie de communication en duplex libre appartenant au numéro de voie d'appel mémorisé dont il mémorise aussi le numéro de voie.

Lorsque le second cycle d'échantillonnage est terminé, le processus d'échantillonnage est à nouveau répété. Ainsi, la voie d'appel à intensité maximale de champ est toujours mémorisée de même qu'une voie de communication libre qui lui est attribuée.

Ces systèmes présentent de nombreux inconvénients.

En effet, tout d'abord la mise en parallèle de plusieurs récepteurs radio est très défavorable car les signaux reçus par chacun d'eux sont atténués par le partage.

De plus, le seul élément commun aux deux récepteurs est un amplificateur présélecteur, chacun d'eux comprenant un égage mélangeur et un oscillateur (ou synthétiseur) couvrant la même bande. Ces systèmes sont relativement onéreux.

Enfin, les fonctions remplies par ces systèmes sont réalisées en logique câblée, ce qui est relativement onéreux et peu performant.

L'invention a donc pour objet un système de radiotéléphonie dans lequel le poste mobile peut changer de relais en cours de communication qui soit moins onéreux à réaliser et moins sensible aux réponses parasites, qui permette d'obtenir un meilleur facteur de bruit et qui soit plus performant.

L'invention se rapporte donc à un système de radiotéléphonie comportant plusieurs relais fixes faisant chacun fonction d'émetteur-récepteur radio accordés sur une première fréquence dite voie balise et sur une pluralité de fréquences dites voies de trafic, et d'unité d'exploitation directement raccordée au réseau téléphonique public commuté, et une pluralité de postes mobiles incluant chacun une logique de commande, une interface avec l'usager, un émetteur radio, un premier et un second récepteurs-radio connectés à un amplificateur d'entrée. Le premier récepteur-radio est accordé sur une voie de balise lorsque le poste mobile n'est pas en communication et sur une voie de trafic lors des communications téléphoniques et comprend un premier mesureur du champ électro-magnétique. Le second récepteur-radio comprend un second mesureur du champ électromagnétique et est spécialisé pour la réception des signaux de données émis sur les voies balises par les relais. La logique de commande est prévue pour que le second récepteur balaye les voies balises de tous les relais.

Selon l'invention, les premier et second récepteurs-radio ont une partie commune en amont de ceux-ci comprenant outre ledit amplificateur d'entrée, un mélangeur, un synthétiseur de fréquence et un étage de fréquence intermédiaire, le partage des signaux étant effectué au niveau dudit étage. De plus, en permanence, la logique de commande reçoit les signaux de sortie du second récepteur-radio et détermine un nouveau relais présentant la plus grande amplitude du champ magnétique et des voies de trafic disponibles et dès que l'amplitude du champ électromagnétique reçu par ledit premier récepteur est inférieure à un seuil déterminé, provoque la procédure d'identification dudit poste mobile, son inscription sur le nouveau relais et l'accord dudit premier récepteur et dudit émetteur sur une voie de trafic dudit nouveau relais.

De préférence, le second récepteur-radio comprend un mélangeur piloté par un synthétiseur de fréquence générant des fréquences inférieures à celles générées par le synthétiseur de ladite partie commune.

De préférence, la procédure d'identification est effectuée par ledit émetteur qui envoie sur la voie de trafic sur laquelle le premier récepteur est accordé, une demande d'une nouvelle voie de trafic sur le nouveau relais.

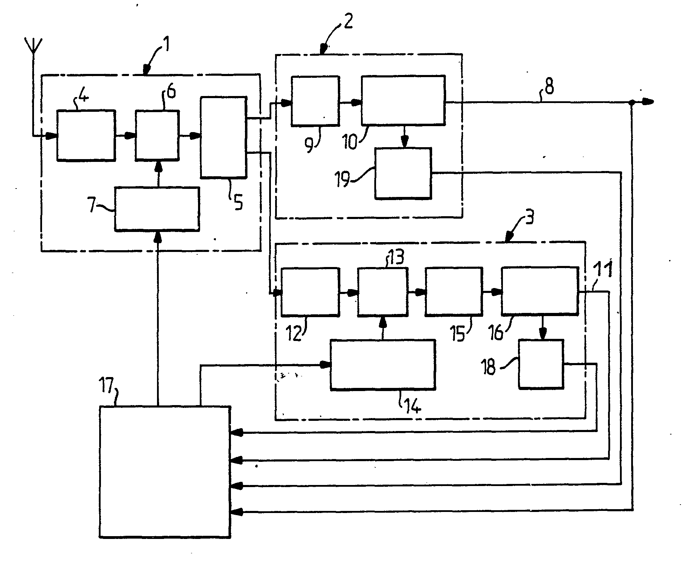

L'invention sera mieux comprise et d'autres buts, avantages et caractéristiques de celle-ci apparaîtront plus clairement à la lecture de la description qui suit, donnée à titre non limitatif, et à laquelle une planche de dessin est annexée sur laquelle la figure unique représente la partie réception d'un poste mobile conforme à la présente invention.

Le système est donc composé de relais fixes et de postes mobiles. De façon générale, chaque poste mobile est rattaché dans l'une des relais appelé relais nominal, qui est, par exemple, le relais dans la zone de couverture duquel la probabilité de trouver le poste mobile est maximale. Ce rattachement à un relais est important pour favoriser l'exploitation du système, notamment en ce que concerne la taxation du service à l'usager et sa localisation rapide. Les autres relais, par rapport au poste mobile concerné, sont appelés des relais de passage.

Lorsque le poste mobile n'est pas en communication, le premier récepteur passe en écoute sur la VB. Lorsque le poste mobile sort de la zone de couverture du relais, le champ électromagnétique diminue et, au-dessous d'un seul déterminé, la logique de commande ordonne le changement de relais. Le second récepteur cherchant en permanence la voie balise d'un relais présentant un champ magnétique maximal et des voies de trafic disponibles, il détermine le nouveau relais de passage.

Par les signaux reçus sur la VB, la logique de commande du poste mobile est informée des VT libres et, sur l'une de celles-ci, l'émetteur décline son identité au nouveau relais. Celui-ci, par liaison spécialisée ou par le réseau téléphonique public, demande les informations administratives relatives au poste mobile, au relais nominal, et l'informe de la nouvelle localisation du poste mobile. Le relais nominal prévient alors le précédent relais qu'il peut effacer le piste mobile de ses tables.

De ce fait, toute conversaion téléphonique transitera automatiquement par le nouveau relais de passage et, dans certains cas (communications entrantes) par le relais nominal.

Si une communication téléphonique est en cours lorsque l'amplitude du champ électromagnétique atteint le seuil minimal acceptable, la communication n'est pas interrompue. Le second récepteur, comme précédemment, recherche un nouveau relais qu'il détermine. L'émetteur adresse sur la VT un message au relais avec lequel la communication est en cours demandant une nouvelle VT sur le nouveau relais. Dès que celle-ci est accordée par le nouveau relais, celui-ci en informe le piste mobile par la VB. A ce moment-là, d'une part la communication téléphonique est basculée du précédent relais au nouveau, à partir du relais qui a initialisé la communication et, d'autre par, la logique de commande du poste mobile accorde le premier récepteur et l'émetteur sur la nouvelle VT. Après bien évidemment transmission de l'identité, la communication en phonie se poursuit.

Il est évident que les signaux de données émis sur la VT ne gênent pas l'usager du fait de leur très courte durée, l'usager ne les entendant pratiquement pas.

Après le basculement le précédent relais efface normalement le poste mobile de ses tables si ce relais n'est pas le relais nominal du poste mobile.

On se référera maintenant à la Figure unique sur laquelle est représentée un mode préféré de réalisation de la partie réception d'une poste mobile conformément à l'invention. La mise en parallèle de plusieurs récepteurs radio est très défavorable parce que les signaux reçus par chacun d'eux sont atténués par le partage et que le prix de l'ensemble augmente. Aussi, il est préférable de mettre en commun toute une partie amont des récepteurs et d'effectuer le partage des signaux au niveau de l'étage de fréquence intermédiaire. En effet, pour les fréquences utilisées (UHF/VHF), l'amplificateur d'entrée 4 présente une largeur de bande suffisante pour amplifier les signaux reçus sur tous les canaux simultanément. Tous ces canaux se retrouvent donc transposés en fréquence intermédiaire à la sortie de l'étage correspondant 5 après passage par le mélangeur 6 piloté par un synthétiseur de fréquences 7.

La partie 2 va constituer la deuxième partie de ce que l'on a appelé le premier récepteur, et délivrer à sa sortie 8 un signal basse fréquence qui sera appliqué à l'interface avec l'usager, généralement constituée par un haut-parleur, et à la logique de commande 17.

Cette partie 2 comprend normalement un étage d'extraction 9 du canal principal en fréquence intermédiaire, comportant un filtre à quartz, et un étage de démodulation 10, et un mesureur de champ 19.

A l'autre sortie de l'étage de fréquence intermédiaire est connectée la partie 3 qui va constituer la deuxième partie de ce que l'on a appelé le second récepteur qui va délivrer sur sa sortie 11 le signal basse fréquence reçu sur les VB. Ce second récepteur devant être capable de balayer toute la bande occupée transposée en fréquence intermédiaire, il doit comporter en entrée un filtre passe-bande 12, par exemple du type LC, un nouveau mélangeur 13, piloté par un synthétiseur de fréquences 14, à la sortie duquel on trouve un filtre à quartz 15 pour l'extraction de la fréquence utile, puis un démodulateur 16. La partie 3 comporte également un mesureur de champ 18.

De toute évidence, pour permettre les changements de fréquence, les synthétiseurs de fréquences 7 et 14 sont commandés par la logique de commande 17 qui reçoit, d'une part, des informations sur la mesure des champs électromagnétiques par l'intermédiaire des mesureurs de champs 18 et 19, d'autre part, les informations transmises par les relais sur les voies balises, et enfin cells éventuellement transmises sur la VT utilisée. L'Homme de l'Art comprendra aisément les avantages présentés par cette mide en commun de la partie amont des deux récepteurs. En effet, un récepteur en fréquence intermédiaire est beaucoup plus simple à réaliser qu'un récepteur en UHF ou VHF, surtout en ce que concerne la tête haute fréquence et le synthétiseur. Le coût également en est nettement inférieur. En outre, le facteur de bruit reste optimal et identique pour tous les canaux.

Un exemple de poste mobile a été réalisé pour un relais émettant 256 canaux séparés de 12,5 kHz autour d'une fréquence de 426 mHz environ. Le synthétiseur de fréquences 7 avait une gamme comprise entre 445,8 et 449 MHz. Le filtre 9 extrayait le signal de fréquence intermédiaire à 21,4 MHz, tandis que le filtre 12 passait les fréquences comprises entre 18,2 et 24,6 MHz. Avec un synthétiseur 14 couvrant une gamme comprise entre 35,1 et 41,5 MHz, on pouvait extraire la voie balise avec un filtre 15 accordé sur 16,9 MHz.

Bien évidement, toute modification apportée par l'Homme de l'Art ne sortirait pas du cadre de la présente invention telle que définie par les revendications ci-après.

Notamment, lorsque le nombre de fréquences utilisées sur un trajet déterminé est limité, ce qui se passe par exemple pour les liaisons téléphoniques avec un poste mobile disposé dans un train effectuant un parcours déterminé, il est possible, dans la partie 3 du deuxième récepteur, d'éliminer les éléments 12, 13 et 14 pour simplifier le circuit et d'accorder le filtre 15 sur la fréquence utile. Dans ce cas il peut également être souhaitable d'ajouter une deuxième partie 3, en parallèle et également simplifiée, accordée sur une troisième fréquence. Un système comportant trois récepteurs avec une unique partie amont est typique pour les applications ferroviaires type sol-train utilisées, notamment en Europe.

Enfin, la fonction de mesure de champ peut être assurée directement par chacun des récepteurs.

## Revendications

1. Système de radiotéléphonie comportant plusieurs relais fixes faisant chacun fonction d'émetteur-récepteur radio accordés sur une première fréquence dite voie balise et une pluralité de fréquences dites voies de trafic, et d'unité d'exploitation directement raccordée au réseau téléphonique public commuté, et une pluralité de postes mobiles incluant chacune une logique de commande, une interface avec l'usager, un émetteur radio, un premier et un second récepteurs-radio connectés à un amplificateur d'entrée (4), ledit premier récepteur-radio étant accordé sur une voie de balise lorsque le poste mobile n'est pas en communication et sur voie de trafic lors des communications téléphoniques et comprenant un premier mesureur du champ électromagnétique, ledit second récepteur-radio comprenant un second mesureur du champ électromagnétique et étant spécialisé pour la réception des signaux de données émis sur les voies balises par lesdits relais, ladite logique de commande étant prévue pour que ledit second récepteur balaye les voies balises de tous les relais, caractérisé en ce que lesdits premier et second récepteurs-radio (1,2; 1,3) ont une partie commune (1) en amont de ceux-ci comprenant outre ledit amplificateur d'entrée (4), un mélangeur (6), un synthétiseur de fréquence (7) et un étage de fréquence intermédiaire (5), le partage des signaux étant effectué au niveau dudit étage et en ce qu'en permanence, la logique de commande (17) reçoit les signaux de sortie dudit second récepteur-radio et détermine un nouveau relais présentant la plus grande amplitude du champ magnétique et des voies de trafic disponibles et dès que l'amplitude du champ électromagnétique reçu par ledit premier récepteur (1, 2) est inférieure à un seuil déterminé, provoque la procédure d'identification dudit poste mobile, son inscription sur le nouveau relais et l'accord dudit premier récepteur et dudit émetteur sur une voie de trafic dudit nouveau relais.

2. Système de radiotéléphonie selon la revendication 1, caractérisé en ce que ledit second récepteur-radio comprend un mélangeur (13) piloté par un synthétiseur de fréquence (14) générant des fréquences inférieures à celles générées par le synthétiseur (7) de ladite partie commune (1).

3. Système de radiotéléphonie selon la revendication 1, caractérise en ce que la procédure d'identification est effectuée par ledit émetteur qui envoie sur la voie de trafic sur laquelle le premier récepteur est accordé, une demande d'une nouvelle voie de trafic sur le nouveau relais.

## Patentansprüche

1. Funkfernsprechsystem bestehend aus mehrereen ortsfesten als Rundfunksender und -empfänger arbeitenden, auf eine erste als Rufkanal bezeichnete Frequenz und auf mehrere als Sprechkanäle bezeichnete Frequenzen abgestimmte Relais, die ebenfalls als Betriebsteil dienen, das direkt an das geschaltete öffentliche Telefonnetz angeschlossen ist, und eine Vielzahl Mobilfernsprecher mit je einer Steuerlogik, einer Teilnehmer-Schnittstelle, einem Funksender, einem ersten und einem zweiten an einen Grundverstärker (4) angeschlossenen Funkempfänger, wobei der erste Funkempfänger auf einen Rufkanal abgestimmt ist, wenn keine Verbindung mit dem Mobilfernsprecher augestellt ist, sowie auf einen Sprechkanal bei Fernsprechverbindungen, und eines erstes elektromagnetisches Feldmessgerät umfasst, und wobei der zweite Funkempfänger ein zweites elektromagnetisches Feldmessgerät aufweist, und insbesondere für den Empfang der durch diese Relais auf den Rufkanälen gesendeten Datensignale ausgelegt ist, wobei diese Steuerlogik vorgesehen ist, damit der zweite Empfänger die Rufkanäle sämtlicher Relais abtastet, dadurch gekennzeichnet, dass der erste und der zweite Funkempfänger (1, 2; 1, 3) ein gemeinsames Teil (1) oberhalb derselben aufweisen, das ausser dem Grundverstärker (4), ein Mischer (6), ein Frequenzabstimmgerät (7) und eine Zwischenfrequenzstufe (5) umfasst, in der die Signalaufteilung erfolgt, und dass ununterbrochen der Steuerlogik (17) die Ausgangssignale von diesem zweiten Funkempfänger zugeführt werden und diese ein neues Relais mit der grössten Magnetfelddamplitude und mit freien Sprechkanäle bestimmt, und sobald die Amplitude des von dem ersten Empfänger (1, 2) empfangenen elektromagnetischen Feldes unter eine bestimmte Schwelle abfällt, die Kennungsprozedur dieses Mobilfernsprechers, dessen Eintragung in das neue Relais und die Abstimmung des ersten Empfängers und des Senders auf einen Sprechkanal dieses neuen Relais bewirkt.

2. Funkfernsprechsystem nach Anspruch 1, dadurch gekennzeichnet, dass der zweite Funkempfänger eine Mischstufe (13) umfasst, die über ein Frequenzabstimmgerät (14) gesteuert wird, das Frequenzen erzeugt, die unter denjenigen von dem Abstimmgerät (7) des gemeinsamen Teils (1) erzeugten Frequenzen liegen.

3. Funkfernsprechsystem nach Anspruch 1, dadurch gekennzeichnet, dass die Kennungsprozedur durch diesen Empfänger ausgeführt wird, der über den Sprechkanal auf den der erste Empfänger abgestimmt ist, einen neuen Sprechkanal auf dem neuen Relais anfordert.

**Claims**

1. Radio telephone system comprising a plurality of fixed relays each serving as radio transmitter-receiver, tuned to a first frequency referred to as the marker channel and a plurality of frequencies referred to as traffic channels, and as operating unit directly connected to the switched public telephone network, and a plurality of mobile stations each including a command logic, an interface with the user, a radio transmitter, and a first and a second radio receivers which are connected to an input amplifier (4), said first radio receiver being tuned to a marker channel when the mobile station is not in communication and to a traffic channel during the telephone communications and comprising a first device for measuring the electromagnetic field, said second radio receiver comprising a second device for measuring the electromagnetic field and being specially arranged for the reception of the data signals transmitted on the marker channels by said relays, said command logic being provided in order that said second receiver should scan the marker channels of all the relays, characterized in that said first and second radio receivers (1,2; 1,3) have a common part (1) upstream of the latter comprising, in addition to said input amplifier (4), a mixer (6), a frequency synthesizer (7) and an intermediate-frequency stage (5), the division of the signals being effected at the location of said stage, and in that the command logic (17) permanently receives the output signals of said second radio receiver and determines a new relay exhibiting the greatest amplitude of the magnetic field and available traffic channels and as soon as the amplitude of the electromagnetic field received by said first receiver (1, 2) is below a determined threshold, initiates the procedure for the identification of said mobile station, the inscription thereof on the new relay and the turning of said first receiver and of said transmitter to a traffic channel of said new relay.

2. Radio telephone system according to Claim 1, characterized in that said second radio receiver comprises a mixer (13) driven by a frequency synthesizer (14) generating frequencies below those generated by the synthesizer (7) of said common part (1).

3. Radio telephone system according to Claim 1, characterized in that the identification procedure is effected by said transmitter which passes on the traffic channel to which the first receiver is tuned a request for a new traffic channel on the new relay.